# EUROPÄISCHE PATENTSCHRIFT

(11) **EP 1 695 001 B1**
(45) Veröffentlichungstag und Bekanntmachung des Hinweises auf die Patenterteilung: **08.07.2009**
(21) Anmeldenummer: 04804773.2
(22) Anmeldetag: 10.12.2004
(51) Int. Cl.: F17C 5/04, F17C 5/06

(54) **VERFAHREN ZUR GASBEFÜLLUNG VON DRUCKGASBEHÄLTERN**
METHOD FOR FILLING COMPRESSED-GAS CONTAINERS
PROCEDE POUR REMPLIR DE GAZ DES RECIPIENTS A GAZ COMPRIME

(30) Priorität: 19.12.2003 DE 10360591
(43) Veröffentlichungstag der Anmeldung: 30.08.2006
(73) Patentinhaber: Messer Group GmbH, 65843 Sulzbach (DE); L'AIR LIQUIDE, Société Anonyme pour l'Etude et l'Exploitation des Procédés Georges Claude, 75007 Paris (FR); Air Liquide Deutschland GmbH, 47805 Krefeld (DE)
(72) Erfinder: MICHEL, Friedel, 40699 Erkrath (DE); KLEBE, Ulrich, 47647 Kerken/Aldekerk (DE)
(74) Vertreter: Münzel, Joachim R.
(86) Internationale Anmeldenummer: PCT/EP2004/053405
(87) Internationale Veröffentlichungsnummer: WO 2005/059431

(56) Entgegenhaltungen:
- DE-A1- 10 107 895
- DE-A1- 19 817 324
- GB-A- 1 450 166
- US-A- 5 101 637
- US-A- 5 837 027
- PATENT ABSTRACTS OF JAPAN Bd. 012, Nr. 212 (M-710), 17. Juni 1988 (1988-06-17) & JP 63 013999 A (NICHIGOU ASECHIREN KK), 21. Januar 1988 (1988-01-21)

## Beschreibung

Die Erfindung betrifft ein Verfahren zur Gasbefüllung von Druckgasbehältem, insbesondere in Airbag-Systemen, mit einem Gasgemisch.

Bei Airbags in Fahrzeugen kommen verstärkt neue Gasgeneratoren zum Einsatz, die den Luftsack bei einem Unfall in wenigen Millisekunden aufblasen. Zur Zeit werden drei Typen von Gasgeneratoren eingesetzt:
- Chemische Generatoren, bei denen das Gas durch die Reaktion eines chemischen Feststoffes mit der Umgebungsluft erzeugt wird;
- So genante Hybridgeneratoren, die aus einer Kombination von Festbrennstoff und Druckgaspackung bestehen und
- reine Gasgeneratoren mit einem Hochdruck-Gasspeichersystem bei Drücken bis zu 700 Bar bei 15 ° C.

Die Gasgeneratoren, die mit verschiedenen Gasen gefüllt sind, werfen bei der Herstellung enorme technische Probleme auf, sowohl bei deren Herstellung als auch bei der Befüllung mit Drucken bis zu 1000 Bar. Diese Drucke werden insbesondere bei schneller Befüllung auf Grund der Kompressionswärme erforderlich, um die genau vorgegebenen Gasmassen einzufüllen. Diese sind für die spätere Aufblascharakteristik des Airbags von entscheidender Bedeutung.

Als Gase kommen z.B. zum Einsatz Argon, Sauerstoff, Stickstoff, Distickstoffmonoxid (Lachgas), sowohl als Reinstgase als auch als Gasgemische aus diesen Komponenten.

Bei gasgefüllten Gasgeneratoren wird gefordert:
1. Fülldrucke bis 1000 bar ( P(T)) für höhere Speicherdichte bzw. kompaktere Baumaße
2. Genaue und Exakte Füllmengenbestimmung bei hohen Drucken
3. Schnelle Befüllung, da diese die Taktzeiten bestimmt
4. Der Vorgang muß in hohem Maße reproduzierbar sein

Um die sehr hohen Drucke zu erzeugen sind sehr teure und aufwendige Kolben- oder Membranverdichter erforderlich. Dies führt zu hohen Invest-Kosten, hohen Betriebs- und Wartungskosten, Zusätzlich wird eine für diese Drucke entsprechend aufwendige und teure nachgeschaltete Gasversorgung erforderlich.

Mit zunehmenden Drucken steigt auf Grund der Kompressionswärme und der ungleichen Temperaturverteilung im Druckbehälter die Ungenauigkeit der exakten Füllmengenbestimmung, die aber für die spätere definierte Funktionsweise des Generators zwingend erforderlich ist.

Mit zunehmenden Drucken wird es technisch schwieriger und aufwendiger schnelle Füllzeiten zu erreichen. Es besteht der direkte Zusammenhang zwischen Füllzeit und der Erwärmung während des Füllvorgangs. D.h. je schneller gefüllt wird um so mehr steigt die Gastemperatur. Dies hat zur Folge hat, dass der Fülldruck noch weiter erhöht werden muß um bei 15 °C oder einer anderen definierten Temperatur die exakte Menge Gas einzufüllen.

Die Reproduzierbarkeit wird aus den genannten Gründen schwieriger, oder bedeutet aufwendige QS-Maßnahmen, wie z.B. das Wiegen der gefüllten Behälter zur exakten Füllmengenbestimmung. Gleichzeitig ist eine stark steigende Ausschussrate bei höheren Drucken zu erwarten. Dies wiederum führt zu geringerer Wirtschaftlichkeit des ganzen Prozesses und damit zu höheren Herstellkosten.

Ein gattungsgemäßes Verfahren ist aus der DE 198 17 324 A1 bekannt.

Der Erfindung liegt die Aufgabe zugrunde, ein alternatives Verfahren für die Hochdruck-Gasbefüllung von Druckgefäßen, insbesondere von Airbag-Gasgeneratoren, mit einem Gasgemisch zu schaffen.

Diese Aufgabe wird erfindungsgemäß gelöst durch ein Verfahren mit den Merkmalen des Anspruchs 1.

Das Verfahren zur Befüllen eines Druckgasbehälters, insbesondere eines Druckgefäßes in einem Airbag-System, mit einem Gasgemisch ist gekennzeichnet durch die Befüllung des Druckgasbehälters bei einer Temperatur, bei der mindestens eine Gaskomponente des Gasgemisches oder herzustellenden Gasgemisches in dem Druckgasbehälter kondensiert oder als flüssige Phase in den Druckgasbehälter gelangt. Das abgefüllte oder in dem Druckgasbehälter herzustellende Gasgemisch dient vorteilhaft zur Herstellung einer Druckgasquelle, insbesondere zur Befüllung eines Druckgasbehälters mit einem Gasgemisch unter Hochdruck (Drücke im Druckgasbehälter z.B. über 50 bar absolut, vorzugsweise über 100 bar, besonders bevorzugt über 200 bar, insbesondere über 250 bar. Das Verfahren ist gekennzeichnet durch die Abfüllung der gleichzeitigen oder nacheinander erfolgenden Abfüllung der Gaskomponenten eines Gasgemisches in gasförmiger oder flüssiger Phase in einen gekühlten Druckgasbehälter, der eine Temperatur aufweist, die der Siedetemperatur einer Gaskomponenten oder einer Temperatur unter dieser Siedetemperatur entspricht (als die Kälte bezeichnet), Verschließen des Druckgasbehälters in der Kälte. Die Herstellung des Druckes, insbesondere eines Hochdruckes, im befüllten und verschlossenen Druckgasbehälter erfolgt in der Regel durch Erwärmung.

Bei dem Verfahren werden Druckgasbehälter mit einem Gasgemisch (bezogen auf Raumtemperatur und Normaldruck) befüllt, beispielsweise durch Befüllen des Druckgasbahälters mit einem abgekühlten gasförmigen Gasgemisch, Befüllen des Druckgasbehälters mit einem abgekühlten flüssigen (z.B. kälteverflüssigten) Gasgemisch oder Befüllen des Druckgasbehälters mit mindestens einem abgekühlten gasförmigen Gas oder Gasgemisch und mindestens einem abgekühlten flüssigen oder Gasgemisch.

Der Druckgasbehälter entspricht beispielsweise einem Druckgefäß in üblichen Gasgeneratoren für Airbag-Systeme. Druckgasbehälter sind ferner Druckgasflaschen, Druckdosen, Druckpatronen, Kleinstdruckgasflaschen.

Der Druckgasbehälter ist z.B. ein Druckgefäß, das ein Teil eines Gasgenerators eines Airbag-Systems ist. Das Druckgefäß ist beispielsweise auch ein selbständiges Teil wie eine Druckpatrone, ein Kleinstdruckgasbehälter oder kleinerer Druckgasbehälter. Das Druckgefäß ist vorzugsweise ein kryotaugliches Druckgasgefäß, das den durch die tiefkalte Befüllung ausgelösten, abrupten, lokalen Temperaturänderungen zwischen der Umgebungstemperatur und der Fülltemperatur, beispielsweise bis -250 °C, standhält und das eingefüllte Gas nach der Temperaturerhöhung bei den resultierenden Speicherdrücken sicher umschließt. Geeignete Werkstoffe für die Druckgefäße sind z.B. die standardisierten, metastabilen austenitischen CrNi-Stähle, insbesondere die Typen 1.4301, 1.4307, 1.4306, 1.4541.

Bei dem Verfahren wird der Druckgasbehälter oder das Druckgefäß, z.B. eine zu befüllende Kammer in einem Gasgenerator eines Airbag-Systems, beispielsweise mit einer Druckgasquelle für das Füllgas (z.B. ein Gas, das eine Komponente eines herzustellenden Gasgemisches ist, oder ein gasförmiges Gasgemisch) verbunden. In der Regel erfolgt dies über eine Gasleitung. Die Druckgasquelle ist beispielsweise ein Druckgasbehälter, insbesondere eine Druckgasflasche, oder eine Hochdruckgasversorgung. Nach Verbindung der Füllkammer mit der Druckgasquelle werden die Wände des zu befüllenden Druckgasbehälters auf die Befülltemperatur abgekühlt. Die Befülltemperatur liegt in der Regel unter 0°C, vorzugsweise unter minus 50 °C und besonders bevorzugt unter minus 100 °C, insbesondere bei einer Temperatur unter minus 150 °C. Vorteilhaft ist eine Befüllung bei der Temperatur von kälteverflüssigtem Wasserstoff (-253 °C), kälteverflüssigtem Stickstoff (-196 °C), kälteverllüssigtem Sauerstoff (-183 °C), kälteverflüssigtem Argon (-186 °C) oder Trockeneis (-78,5 °C), je nach Art des Füllgases und des gewünschten, zu erzeugenden Fülldruckes. Die Kühlung des Druckgefäßes erfolgt bevorzugt bei einer konstanten Temperatur. Die Kühlung erfolgt z.B. mittels eines Kältebades oder Tauchbades mit einer Kühlflüssigkeit (z.B. tiefkalt verflüssigte Gase), eines Kühlblocks (z.B. gekühlter Metallblock), eines kalten Gases (z.B. Einsatz eines Gastunnels), kalten Feststoffteilchen (z.B. gekühlte Metallkugeln, Trockeneisteilchen), einem kalten Feststoff (z.B. Trockeneis) oder einer thermostatierbaren Kühleinrichtung. Beispielsweise erfolgt die Kühlung in einem Tauchbad mit einem-Kältemittel wie kälteverflüssigtem Sticktoff (LN2). Ein Kältebad mit einem tiefkalt verflüssigten Gas oder Trockeneis bietet den Vorteil der Kältekonstanz.

Besonders vorteilhaft ist die Verwendung eines kälteverflüssigten Gases (z. B. LN2) als Kältemittel in einem Kältebad:
- Am Siedepunkt ist die Temperatur nur vom Druck abhängig, also z. B. bei konstantem Umgebungsdruck exakt definiert.
- Durch den guten Wärmeübergang in der siedenden Flüssigkeit wird der Behälter schnell bis zur Innenoberfläche auf ebenfalls exakt die Siedetemperatur gebracht.
- Der Fülldruck zur Erzielung der erforderlichen Füllmenge wird gegenüber einem konventionellen Füllverfahren drastisch abgesenkt, z. B. auf 20 - 25%, d.h. um den Faktor 4 bis 5; für Gasgemische, die auch tiefersiedende Gaskomponenten enthalten (bezogen auf die Befüllungstemperatur) kann noch eine wesentlich stärkere Druckabsenkung erreicht werden, je nach Anteil der Komponenten.

Das zu speichernde Gas oder Gasgemisch gelangt vorteilhaft im tiefkalten, gasförmigen Zustand (z.B. durch Kühlung im Druckgefäß oder durch Kühlung vor dem Druckgefäß) in das Druckgefäß. Das Druckgefäß ist vor der Befüllung vorteilhaft evakuiert. Zur Befüllung wird eine Verbindung zwischen dem gekühlten Druckgefäß und der ungekühlten Druckgasquelle hergestellt ein bestimmter Druck eingestellt. Die Druckgasquelle (z.B. eine Druckgasquelle mit dem Gas oder Gasgemisch) weist in der Regel eine Temperatur im Bereich von 0 °C und 100 °C auf. Die Druckgasquelle hat z.B. Umgebungstemperatur, insbesondere Raumtemperatur (15 bis 30 °C). Bei der Befüllung des Druckgefäßes unterscheidet sich die Temperatur von Druckgefäß und Druckgasquelle vorzugsweise um mindestens 50 °C, besonders bevorzugt um mindestens 100 °C, insbesondere um mindestens 150 °C. Die Temperatur des Gases oder Gasgemisches in Druckgefäß und Druckgasquelle unterscheidet sich vorzugsweise um mindestens 50 °C, besonders bevorzugt um mindestens 100 °C, insbesondere um mindestens 150 °C.

Der eingestellte oder bestehende Druck, das ist der Druck im gekühlten Druckgefäß (primäre Fülldruck), liegt im allgemeinen im Bereich von über 1 bar bis 400 bar absolut, vorzugsweise im Bereich von 10 bar bis 300 bar absolut, besonders bevorzugt im Bereich von 50 bar bis 150 bar absolut, insbesondere im Bereich von 70 bar bis 100 bar absolut.

Die Befülltemperatur (Kühltemperatur) des Druckgefäßes wird vorzugsweise so gewählt, dass die Befülltemperatur über dem Siedepunkt des eingefüllten Gases oder dem Siedepunkt der höchstsiedenden Gaskomponente des eingefüllten Gasgemisches liegt, damit keine Kondensation des Gases in dem Druckgefäß erfolgt. Dies erlaubt eine manometrische Kontrolle der Befüllung und eine manometrische Bestimmung der Füllmenge.

Nach der Befüllung des gekühlten Druckbehälters wird dieser verschlosssen und es folgt eine Erwärmung des Druckbehälters mit dem eingefüllten Gas. In der Regel wird auf die spätere Gebrauchstemperatur (Umgebungstemperatur oder Raumtemperatur) erwärmt. Die Erwärmung erfolgt beispielsweise durch Entfernung der Kühlquelle (z.B. durch Entnahme des gefüllten Druckbehälters aus einem Kältebad). Die Erwärmung auf Umgebungstemperatur erfolgt also beispielsweise durch Wärmeaustausch mit der Umgebung. Die Erwärmung wird alternativ auch durch aktive Beheizung bewirkt.

Der End-Fülldruck oder sekundäre Fülldruck (Gleichgewichtsdruck) stellt sich nach der Erwärmung auf die gewünschte Temperatur, in der Regel die Umgebungstemperatur, ein. Der End-Fülldruck ist durch die eingefüllte Gasmenge bestimmt.

Zur Herstellung einer Druckgasquelle werden vorteilhaft bei der Befüllung des Druckgasbehälters Gasgemische hergestellt oder eingesetzt, die mindestens eine Gaskomponenten enthalten, die bei der Befülltemperatur als Gas vorliegt, und mindestens eine Gaskomponente enthalten, die bei der Befülltemperatur als Flüssigkeit vorliegt.

In Tabelle 1 werden beispielhaft geeignete Befütttemperaturen für verschiedene Gasgemische oder herzustellende Gasgemische aufgeführt.

**Tabelle 1: Beispiele von Gasen und Fülliemperaturen**

| Gasgemisch | Befülltemperatur / °C; Kältemittel (flüssig oder fest) | | | | |
|---|---|---|---|---|---|
| He/Ar; He/N₂; He/CO₂; He/N₂O; | -253 °C; H₂ | -196 °C; N₂ | -186 °C; Ar | -183 °C; O₂ | -78°-C; CO₂ |
| H₂/Ar; H₂/N₂; H₂/CO₂; H₂/N₂O; | -253°C; H₂ | -196 °C; N₂ | -186 °C; Ar | -183 °C; O₂ | -78 °C; CO₂ |
| N₂/Ar; N₂/CO₂; H₂/N₂O; | -253°C; H₂ | -196 °C; N₂ | -186 °C; Aᵣ | -183 °C; O₂ | -78 °C; CO₂ |
| Ar/He/O₂, 77:3:20 Vol.-% | -253 °C; H₂ | -196 °C; N₂ | -186 °C; Ar | -183 °C; O₂ | -78 °C; CO₂ |
| N₂/He/O₂, 77:3:20 Vol.-% | -253 °C; H₂ | -196 °C; N₂ | -186 °C; Ar | -183 °C; O₂ | -78 °C; CO₂ |

Je nachdem, wie groß die zugeführte Gasmenge ist, können so ohne größeren technischen und energetischen Aufwand sehr hohe Speicherdrücke, insbesondere auch solche über 300 bar realisiert werden.

### Verfahren zur Herstellung von Gasgemischen oder zur Befüllung von Druckgasbehältern mit einem Gasgemisch (Verfahren mit kalter Befüllung)

Beispiele c) bis f) gehören nicht zur Erfindung.

### a) Manometrische Befüllung mit Gasgemisch mit Gaskomponente, die bei der Befülltemperatur als Flüssigkeit kondensiert.

Erfindungsgemäß sind Druckgasbehälter (z.B. Gasgeneratoren für Airbags) mit Gasgemischen aus mindestens einer höhersiedenden Komponente (bezogen auf die Befüllungstemperatur) und mindestens einer tiefersiedenden Komponente (bezogen auf die Befüllungstemperatur).

Beispiel Helium/Argon-Gasgemisch oder Helium/Sauerstoff-Gasgemisch, Befüllung bei minus 196 °C (Flüssigstickstoffbad). Helium dient als tiefersiedende Komponente (bezogen auf die Befüllungstemperatur von minus 196 °C), Argon oder Sauerstoff dienen als höhersiedende Komponente (gezogen auf die Befüllungstemperatur von minus 196 °C). Das heiße bei Befüllung des gasförmigen Gasgemisches Helium/Argon-Gasgemisch oder Helium/Sauerstoff-Gasgemisch in den im Flüssigifickstoffbad auf minus 196 °C abgekühlten Druckgasbehälter bleibt Helium im Druckgasbehälter gasförmig, während Argon oder Sauerstoff kondensieren.

Das Verfahren mit der Abfüllung solcher Gasgemische ist besonders vorteilhaft für die Herstellung einer Druckgasquelle:
Wenn ein Gasgemisch aus 2 Komponenten, z.B. Argon und Helium; z.B. unter LN2-Temperatur (LN2: kälteverflüssigter Stickstoff, Flüssigstickstoff) abgefüllt wird, wird.

Argon auskondensieren und sogar in den festen Zustand übergehen, während Helium gasförmig bleibt. Daraus ergibt sich das gegenüber der reinen Heliumabfüllung unter LN2-Temperatur zusätzliche Potenzial zur Druckabsenkung, das bei zunehmendem Argonanteil im Gemisch weiter ansteigt. Das heißt durch den "verminderten Druck" bei der Befüllung des Druckgasbehälters bei der Befüllungstemperatur wird bei einem gegebenen Fülldruck ein höherer Enddruck in dem Druckgasbehälter bei Raumtemperatur erhalten.

Hier eine weitere Erläuterung des Verfahrens.
Nach Eintauchen des Druckgasbehälters in das Kältebad wird das zu füllende Gasgemisch über ein Gasversorgungssystem aus einem Druckgasspeicher oder mittels Kompressor in den Behälter gefüllt. Das Gasgemisch, z.B. Helium/Argon nimmt hierbei schnell die Temperatur der Oberfläche des Druckgasbehälters und damit der Befüllungstemperatu (z.B. Siedetemperatur des Stickstoffs bei Einsatz eines Flüssigstickstoffbades) an. Die Kompressionswärme wird dabei durch den Behälter an das Kältebad abgegeben. Es stellt sich die entsprechende Dichte ein, die natürlich wesentlich höher ist als bei Raumtemperatur. Der Fülldruck wird dabei hauptsächlich durch die tiefersiedende Komponente bestimmt, da die höhersiedende sich verflüssigt oder sogar fest wird, wobei ihr Partialdruck gegen "0" geht.
Das Helium nimmt in diesem Beispiel sozusagen die Rolle eines "Leitgases" an, weil sein Partialdruck die bestimmende Größe ist.
Die erforderliche Füllmasse lässt sich so für die Siedetemperatur einfach über den Fülldruck des "Leitgases" exakt und reproduzierbar einstellen (manometrisch kontrollierte Befüllung). Die Bestimmung der Füllmenge in dem Druckgasbehätter erfolgt also über den Fülldruck der nicht kondensierenden, gasförmigen Gaskomponente. Der Fehler bei der manometrischen Füllmengenbestimmung durch kondensierende Gaskomponenten im Druckgasbehälter kann z.B. empirisch bestimmt und dann korrigiert werden.

Anschließend wird der Behälter mit geeigneten Mitteln unter Druck verschlossen.

### b) Manometrische Befüllung mit Gasgemisch mit einer Gaskomponente, die bei der Befülltemperatur als Feststoff kondensiert.

Ausführung des Verfahrens wie unter a).
Beispiel: Helium/Kohlendioxid-Gasgemisch, Befüllung bei minus 196 °C (Flüssigstickstoffbad).

### c) Nacheinander erfolgende manometrische Befüllung mit Gaskomponenten, die bei der Befülltemperatur als Gas vorliegen.

Die Gasgemische werden manometrisch in den kalten Behälter hergestellt/ eingefüllt durch Schrittweise manometrische Dosierung der gewünschten Partialdrucke der Gaskomponenten.

Die Herstellung von Gasgemischen mittels eines manometrischen Füllverfahrens ist in der DE 197 04 868 C1 beschrieben, worauf hiermit Bezug gekommen wird. Das Verfahren mit der Befüllung eines gekühlten Druckbehälters läßt sich analog durchführen.

### Beispiel:

1. Helium/Argon-Gasgemisch, Befüllung bei minus 78 °C (Trockeneiskühlung);
2. Halium/Stickstoff-Gasgemisch, Befüllung bei minus 183 °C (Argon-Kältebad).

### d) Volumetrische Befüllung mit Gasgemisch, das bei der Befülltemperatur als Flüssigkeit vorliegt.

Das flüssige Gasgemisch wird in den Druckgasbehälter als Flüssigkeit dosiert, wobei die Menge z.B. in einer auf die Befülltemperatur oder darunter abgekühlten Dosierbehälter mit bekanntem Volumen oder eine durch Ventile verschließbare "Meßstrecke", z.B. einen in die Füllleitung angeordneten Durchflußbehälter, abgefüllt wird. Die volumetrische Bestimmung der Flüssigkeitsmenge erfolgt vorteilhaft mit genügend präzisen Durchflußmeßeinrichtungen (z.B. Durchflußsensor).

### e) Nacheinander erfolgende volumetrische Befüllung mit Gaskomponenten, die bei der Befülltemperatur als Flüssigkeit vorliegen.

Die Gaskomponenten des Gasgemisches werden einzeln nacheinander in den Druckgasbehälter als Flüssigkeit dosiert, wobei die Mengen z.B. in einer auf die Befülltemperatur oder darunter abgekühlten Dosierbehälter mit bekanntern Volumen oder eine durch Ventile verschließbare "Meßstrecke", z.B. einen in die Fülleitung angeordneten Durchflußbehälter, abgefüllt werden. Die volumetrische Bestimmung der Flüssigkeitsmenge erfolgt vorteilhaft mit genügend präzisen Durchflußmeßeinrichtungen (z.B. Durchflußsensor).

### f) Abfüllung eines Gasgemisches über vorgelagerten Messgasbehälter

Beispiel: Sauerstoff/Argon-Gasgemisch, Befüllung bei minus 196 °C
(Flüssigstickstoffbad).

In einen vorgeschalteten Behälter mit exakt definiertem Volumen wird bei definierter Temperatur, bevorzugt Umgebungstemp, das vorgefertigte gasförmige Gasgemisch bei niedrigem Druck (40 bis 200 Bar) eingefüllt.
Als Gasquelle kann ein Mitteldruckspeicher, Bündel etc dienen oder eine aus den Einzelgaskomponenten volumetrisch hergestelltes Gemisch, das über einen Kompressor verdichtet wird. Der Messbehälter ist über geeignete Konfiguration Ventile (Pneumatik Ventile zur Automatisierung) an den in die tiefsiedende Flüssigkeit eingetauchten Behälter über eine lösbare Verbindung abgeschlossen.
Das Volumen des zu fügenden Druckgasbehälters ist um den Faktor F kleiner als der Gasmeßbehälter.
Nach dem oben beschrieben Prinzip, wird durch Druckausgleich und durch die kalte Oberfläche des Behälters das Gasgemisch bei der definieren Siedetemperatur eingefüllt. Die komplette, zuvor aus den Zustandsgrößen bestimmte Gasmenge des Messgasbehälters wird anschließend bei wesentlich höherer Dichte eingefüllt.

Anschließend wird der Behälter aus dem Kältebad entnommen und erwärmt. Es stellt sich ebenfalls eine entsprechende Druckerhöhung um den Faktor X ein. Auf diese Weise lassen sich Gasgemische mit höheren Siedetemperaturen als der Befülltemperatur exakt und definiert bei niedrigen Drucken einfüllen. Die Vorteile von oben gelten entsprechend. Die Mengenbestimmung erfolgt über den Messgasbehälter.

Die Herstellung von Gasgemischen mittels eines Meßgasbehälters ist in der DE 197 44 559 C2 beschrieben, worauf hiermit Bezug gekommen wird. Das Verfahren mit der Befüllung eines gekühlten Druckbehälters läßt sich analog durchführen.

**Die Vorteile der Verfahren mit kalter Befüllung:**
- Die Befüllung kann mit wesentlich niedrigeren Arbeitsdrücken erfolgen.
- Keine Höchstdruckkompressoren erforderlich, Standardkomponenten sind einsetzbar.
   ■ Entsprechend wirtschaftlicher, geringere Wartungs- und Betriebskosten
- Reproduzierbar und exakt.
- Geringer Ausschuss.
- Hoher Wirkungsgrad z.B. bei Helium, geringe verluste
   ■ Entsprechend wirtschaftlicher
- Weniger aufwendige Qualitätssicherung, sogar kompletter Wegfall möglich.
- Der Prozess ist schnell und in hohem Maß automatisierbar.

Die Erfindung, Verfahren mit kalter Befüllung, wird am vereinfachten Beispiel der Abfüllung eines einkomponentigen Gases anhand der Zeichnung erläutert.

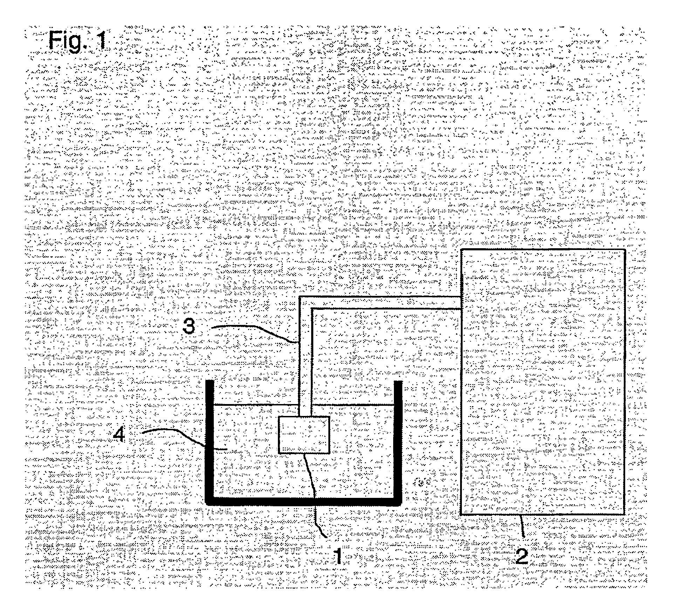

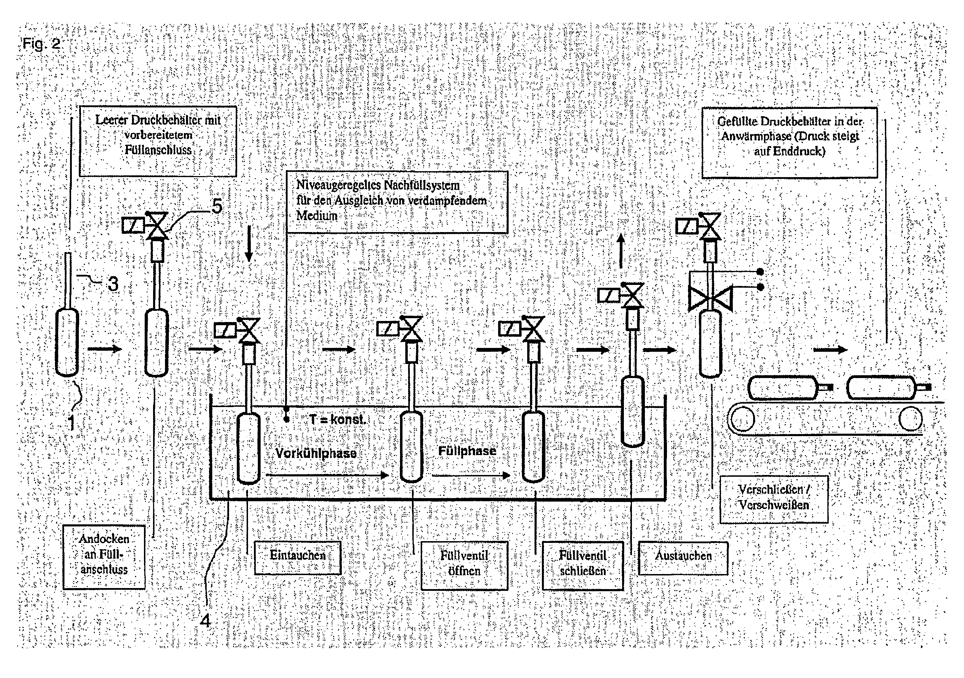

Fig. 1 zeigt ein stark vereinfachtes Schema einer Fülleinrichtung für Druckgefäße, das zur Erläuterung der Erfindung dient. Fig. 2 zeigt schematisch und als Beispiel die verschiedenen Stufen eines Füllprozesses für Druckgefäße.

Die Fülleinrichtung in Fig. 1 weist ein zu befüllendes Druckgefäß 1, eine Druckgasquelle 2, z.B. eine Druckgasflasche (Fülldruck z.B. 300 bar) mit Helium oder Wasserstoff mit Absperrventil und Druckminderer, eine Gasverbindungsleitung 3 und ein Kältebad 4 mit einem tiefkalt verflüssigten Gas wie Flüssigstickstoff als Kältemittel auf, Das Druckgefäß 1 ist z.B. Teil eines Gasgenerators eines Airbag-Systems oder eine Gaspatrone.

Nach Eintauchen des Druckgefäßes 1 in das Kältebad 4 wird das zu füllende Gas aus der Druckgasquelle 2 in das Druckgefäß 1 durch Einstellung eines gewünschten Druckes (z.B. 90 bar absolut; eingestellt am Druckminderer der Druckgasflasche) gefüllt. Das Gas, z. B. Helium oder Wasserstoff, nehmen hierbei schnell die Temperatur der Oberfläche und damit der Siedetemperatur des Kältemittels an. Das Gas wird im Druckgefäß 1 auf die Temperatur des Kältebades abgekühlt. Die Siedetemperatur des Gases liegt unter der Temperatur des Kältebades, so dass keine Kondensation des Gases im Druckgefäß 1 eintritt. Es stellt sich eine der Temperatur entsprechende Dichte ein, die wesentlich höher ist als bei Raumtemperatur. Die erforderliche Füllmasse des Gases lässt sich bei der konstanten Temperatur des Kältebades einfach über den Fülldruck exakt und reproduzierbar einstellen. Anschließend wird das Druckgefäß 1 mit geeigneten Mitteln unter Druck verschlossen. Der Verschluß des Druckgefäßes 1 erfolgt z.B. am Füllrohr (Gaszuleitung 3), das direkt nach dem Temperaturausgleich bei der Fülltemperatur zugequetscht und/oder zugeschweißt wird. Anschließend wird der Behälter aus dem Kältebad entnommen und erwärmt. Man erzeugt über die Temperaturerhöhung (Erwärmung) eine Druckerhöhung (bei Helium ca. 3,7-fach, bei H₂ ca. 5-fach für einen Temperaturanstieg von 77 auf 288 K). Es lassen sich z.B. Fülldrücke von 700 bar oder 1000 bar (bei Raumtemperatur) erzeugen.

In Fig. 2 werden Schritte bei der Gasbefüllung von Druckgefäßen 1 dargestellt. Das Druckgefäß wird während der Befüllung mit der Druckgasquelle 2 (nicht gezeigt) verbunden. Die Verbindung erfolgt über einen Anschluß der Füllleitung am Absperrventil 5.

## Patentansprüche

1. Verfahren zum Befüllen eines Druckgasbehälters, insbesondere eines Druckgasbehälters in einem Airbag-System, mit einem Gasgemisch oder zur Herstellung eines Gasgemisches in einem Druckgasbehälter, wobei ein Gasgemisch als Gas oder kälteverflüssigtes Gas oder mindestens eine Gaskomponente des Gasgemisches als Gas oder kälteverflüssigtes Gas in einen gekühlten Druckbehälter eingebracht wird, **dadurch gekennzeichnet, daß** der Druckbehälter eine Temperatur aufweist, gegenüber der mindestens eine Gaskomponente höhersiedend bezogen auf die Befüllungstemperatur und mindestens eine Gaskomponente tiefersiedend bezogen auf die Befüllungstemperatur ist.

2. Verfahren nach Anspruch 1, **dadurch gekennzeichnet, dass** ein Druck in dem befüllten und verschlossenen Druckgasbehälter durch Erwärmen erzeugt wird.

3. Verfahren nach Anspruch 1 oder 2, **dadurch gekennzeichnet, dass** die Erwärmung durch aktive Beheizung oder durch Temperaturausgleich auf Raumtemperatur, Umgebungstemperatur oder eine Temperatur auf oberhalb von 0 °C erfolgt.

4. Verfahren nach einem der Ansprüche 1 bis 4, **dadurch gekennzeichnet, dass** der Druckgasbehälter von außen mit einem tiefkalt verflüssigten Gas oder einem tiefkalt verflüssigten Gasgemisch gekühlt wird oder die Kühlung des Druckbehälters mittels eines Kältebades, eines Kühlblocks, eines kalten Gases, kalten Feststoffteilchen oder einer thermostatisierbaren Kühleinrichtung erfolgt.

5. Verfahren nach einem der Ansprüche 1 bis 4, **dadurch gekennzeichnet, dass** die Befüllung des Druckgasbehälters bei einer Kälte von mindestens minus 50 °C oder weniger erfolgt.

6. Verfahren nach einem der Ansprüche 1 bis 5, **dadurch gekennzeichnet, dass** die Befüllung des Druckgasbehälters bei konstanter oder im wesentlichen konstanter Temperatur erfolgt.

7. Verfahren nach einem der Ansprüche 1 bis 6, **dadurch gekennzeichnet, dass** bei der Befüllung des Druckgasbehälters mit kälteverflüssigtem Gas oder einem kälteverflüssigtem Gasgemisch die Bestimmung und Kontrolle der Füllmenge gravimetrisch oder volumetrisch erfolgt.

8. Verfahren nach einem der Ansprüche 1 bis 7, **dadurch gekennzeichnet, das** die Bestimmung und Kontrolle der Füllmenge manometrisch erfolgt.

9. Verfahren nach einem der Ansprüche 1 bis 8, **dadurch gekennzeichnet, dass** ein Meßgasbehälter eingesetzt wird.

10. Verfahren nach einem der Ansprüche 1 bis 9, **dadurch gekennzeichnet, dass** das Einbringen von tiefkalt verflüssigtem Gas oder tiefkalt verflüssigtem Gasgemisch in den Druckgasbehälter durch Kondensation eines Gases in den gekühlten Druckgasbehälter erfolgt.

11. Verfahren nach einem der Ansprüche 1 bis 10,**dadurch gekennzeichnet, dass** der Druckgasbehälter mit einem Gasförmigem Gas oder Gasgemisch befüllt wird durch Befüllung mit mindestens einem vorgefertigtem gasförmigen Gasgemisch oder durch aufeinander folgende Befüllung mit eines gasförmigen Gases oder durch aufeinander folgende Befüllung mit mindestens einem gasförmigen Ga und mindestens einem gasförmigem Gasgemisch.

12. Verfahren nach einem der Ansprüche 1 bis 11, **dadurch gekennzeichnet, dass** die Befüllung des Druckgasbehälters mit einem Gas oder Gasgemisch unter Druck erfolgt.

## Claims

1. Method for filling a compressed-gas container, in particular a compressed-gas container in an airbag system, with a gas mixture or for producing a gas mixture in a compressed-gas container, in which a gas mixture as gas or cryogenically liquefied gas or at least one gas component of the gas mixture as gas or cryogenically liquefied gas is introduced into a cooled compressed-gas container, **characterized in that** the pressure vessel has a temperature, compared to which at least one gas component is higher-boiling, based on the filling temperature, and at least one gas component is lower-boiling, based on the filling temperature.

2. Method according to Claim 1, **characterized in that** a pressure is generated in the filled and closed compressed-gas container by warming.

3. Method according to Claim 1 or 2, **characterized in that** the warming is effected by active heating or by temperature compensation to room temperature, ambient temperature or a temperature above 0°C.

4. Method according to one of Claims 1 to 3, **characterized in that** the compressed-gas container is externally cooled with a cryogenically liquefied or a cryogenically liquefied gas mixture, or the cooling of the pressurized container is effected by means of a refrigeration bath, a cooling block, a cold gas, cold solid particles or a thermostated cooling device.

5. Method according to one of Claims 1 to 4, **characterized in that** the filling of the compressed-gas container takes place at a refrigeration temperature of at least -50°C or below.

6. Method according to one of Claims 1 to 5, **characterized in that** the filling of the compressed-gas container takes place at a constant or substantially constant temperature.

7. Method according to one of Claims 1 to 6, **characterized in that** the determination and monitoring of the filling quantity during the filling of the compressed-gas container with cryogenically liquefied gas or a cryogenically liquefied gas mixture are carried out gravimetrally or volumetrically.

8. Method according to one of Claims 1 to 7, **characterized in that** the determination and monitoring of the filling quantity takes place manometrically.

9. Method according to one of Claims 1 to 8, **characterized in that** a measurement gas container is used.

10. Method according to one of Claims 1 to 9, **characterized in that** the introduction of cryogenically liquefied gas or cryogenically liquefied gas mixture into the compressed-gas container is effected by condensation of a gas in the cooled compressed-gas container.

11. Method according to one of Claims 1 to 10, **characterized in that** the compressed-gas container is filled with a gaseous gas or gas mixture by filling with at least one gaseous gas mixture that has previously been produced or by successive filling with a gaseous gas or by successive filling with at least one gaseous gas and at least one gaseous gas mixture.

12. Method according to one of Claims 1 to 11, **characterized in that** the filling of the compressed-gas container with a gas or gas mixture takes place under pressure.

## Revendications

1. Procédé pour remplir d'un mélange de gaz un récipient à gaz sous pression, en particulier un récipient à gaz sous pression d'un système de coussin gonflable de sécurité, ou pour former un mélange de gaz dans un récipient à gaz sous pression,
dans lequel un mélange de gaz sous forme gazeuse ou de gaz liquéfié à froid ou au moins un composant gazeux du mélange de gaz sous forme de gaz ou de gaz liquéfié à froid sont amenés dans un récipient sous pression refroidi,
**caractérisé en ce que**
la température de remplissage du récipient sous pression est plus basse que le point d'ébullition d'au moins un composant gazeux et plus haute que le point d'ébullition d'au moins un composant gazeux.

2. Procédé selon la revendication 1, **caractérisé en ce que** la pression dans le récipient à gaz sous pression rempli et fermé est établie par chauffage.

3. Procédé selon les revendications 1 ou 2, **caractérisé en ce que** le chauffage s'effectue par chauffage actif ou par équilibrage des températures avec la température du local, la température ambiante ou une température supérieure à 0°C.

4. Procédé selon l'une des revendications 1 à 4, **caractérisé en ce que** le récipient à gaz sous pression est refroidi de l'extérieur par un gaz cryo-liquéfié ou un mélange de gaz cryo-liquéfié ou **en ce que** le refroidissement du récipient sous pression s'effectue au moyen d'un bain froid, d'un bloc de refroidissement, d'un gaz froid, de particules solides froides ou d'un dispositif de refroidissement thermostatisé.

5. Procédé selon l'une des revendications 1 à 4, **caractérisé en ce que** le remplissage du récipient à gaz sous pression s'effectue à un froid d'au moins moins 50°C ou moins.

6. Procédé selon l'une des revendications 1 à 5, **caractérisé en ce que** le remplissage du récipient à gaz sous pression s'effectue à température constante ou essentiellement constante.

7. Procédé selon l'une des revendications 1 à 6, **caractérisé en ce que** la détermination et le contrôle de la quantité introduite lors du remplissage du récipient à gaz sous pression en gaz cryo-liquéfié ou en mélange de gaz cryo-liquéfié s'effectuent par gravimétrie ou volumétrie.

8. Procédé selon l'une des revendications 1 à 7, **caractérisé en ce que** la détermination et le contrôle de la quantité introduite s'effectuent par manométrie.

9. Procédé selon l'une des revendications 1 à 8, **caractérisé en ce que** l'on utilise un récipient à gaz de mesure.

10. Procédé selon l'une des revendications 1 à 9, **caractérisé en ce que** l'introduction du gaz cryo-liquéfié ou du mélange de gaz cryo-liquéfié dans le récipient à gaz sous pression s'effectue par condensation d'un gaz dans le récipient à gaz sous pression refroidi.

11. Procédé selon l'une des revendications 1 à 10, **caractérisé en ce que** le récipient à gaz sous pression est rempli d'un gaz ou d'un mélange de gaz sous forme gazeuse en étant rempli par au moins un mélange de gaz sous forme gazeuse préalablement préparé, en étant rempli successivement d'un gaz sous forme gazeuse ou en étant rempli successivement par au moins un gaz sous forme gazeuse et au moins un mélange de gaz sous forme gazeuse.

12. Procédé selon l'une des revendications 1 à 11, **caractérisé en ce que** le remplissage du récipient à gaz sous pression par un gaz ou un mélange de gaz s'effectue sous pression.
